# EUROPEAN PATENT APPLICATION

(11) **EP 4 550 273 A1**
(43) Date of publication of application: **07.05.2025**
(21) Application number: 24159062.9
(22) Date of filing: 22.02.2024
(51) Int. Cl.: G06V 10/26, G06V 10/82

(54) **IMAGE SEGMENTATION USING ASSOCIATED TEXT DATA**

(30) Priority: 03.11.2023 WO PCT/CN2023/129687
(71) Applicant: Koninklijke Philips N.V., 5656 AG Eindhoven (NL)
(72) Inventor: JIN, Peijie, Eindhoven (NL); YU, Wenjin, Eindhoven (NL); HONG, Xiaowei, 5656AG Eindhoven (NL)
(74) Representative: Philips Intellectual Property & Standards

(57) **Abstract**

Embodiments of the present disclosure relate to a method for image segmentation using associated text data, a device and a computer program product. The method comprises obtaining a high-level image feature from at least one image and a high-level text feature from text data associated with the at least one image. The method further comprises obtaining at least one target high-level feature based on fusion of the high-level image feature and the high-level text feature. The method further comprises obtaining a target low-level feature based on decoding of the at least one target high-level feature; and determining segmentation of the at least one image based on the target low-level feature. In this way, both image and text data are utilized to improve the ceiling of accuracy of image segmentation without requiring a large amount of expensive annotated data.

## Description

### FIELD OF THE INVENTION

Embodiments of the present disclosure generally relate to a field of image processing, and more specially, to a method for image segmentation using associated text data, a device and a computer program product.

### BACKGROUND OF THE INVENTION

Segmentation of medical images (also referred as "contouring") is the most crucial task in the field of medical artificial intelligence (Al), resulting in a sustained focus on auto-segmentation technology in industry and research. Specifically, image segmentation for radiotherapy purposes can be extremely time-consuming for physicians, and the success of radiotherapy often mostly depends on the quality of segmentation.

With the arising of Al in medicine, various deep learning models have been proposed to address different image segmentation tasks. However, the limitations of these models often arise due to the scarcity of high-quality annotated images. Although some solutions have been proposed to enhance the performance of the segmentation models, including data augmentation and model modification, there are still some gaps between current results and expectations.

### SUMMARY OF THE DISCLOSURE

One reason that current approaches for image segmentation result in unsatisfying performances is that they only focuses on existing image data, disregarding text data, despite the fact that the majority of patients' records are written in natural language and formatted as free text files. In view of this, embodiments of the present disclosure propose a method, a device and computer program for image segmentation using associated text data in addition to image data.

In a first aspect, the embodiments of the present disclosure provide a method for image segmentation. The method comprises obtaining a high-level image feature from at least one image and a high-level text feature from text data associated with the at least one image; obtaining at least one target high-level feature based on fusion of the high-level image feature and the high-level text feature; obtaining a target low-level feature based on decoding of the at least one target high-level feature; and determining segmentation of the at least one image based on the target low-level feature. In this way, both image and text data are utilized to improve the ceiling of accuracy of image segmentation without requiring a large amount of expensive annotated data.

In a second aspect, the embodiments of the present disclosure provide a device. The device comprises: a processor; and a memory having instructions stored thereon, when executed by the processor, cause the device to: obtain a high-level image feature from at least one image and a high-level text feature from text data associated with the at least one image; obtain at least one target high-level feature based on fusion of the high-level image feature and the high-level text feature; obtain a target low-level feature based on decoding of the at least one target high-level feature; and determine segmentation of the at least one image based on the target low-level feature.

In a third aspect, the embodiments of the present disclosure provide a computer program product comprising a computer readable medium. The computer readable medium has computer readable code embodied therein. The computer readable code is configured such that, on execution by a computer or processor, the computer or processor is caused to perform the method of the first aspect.

It is to be understood that the Summary is not intended to identify key or essential features of embodiments of the present disclosure, nor is it intended to be used to limit the scope of the present disclosure. Other features of the present disclosure will become easily comprehensible through the description below.

### BRIEF DESCRIPTION OF THE DRAWINGS

The details of one or more embodiments of the present disclosure are set forth in the accompanying drawings and the description below. Other features, aspects, and advantages of the disclosure will become apparent from the description, the drawings, and the claims, wherein:
Fig. 1 illustrates a block diagram of a computing device in which embodiments of the disclosure can be implemented;
Fig. 2 illustrates a flowchart illustrating an example process for image segmentation in accordance with some embodiments of the present disclosure;
Fig. 3 illustrates a schematic diagram of a framework for image segmentation using associated text data with image data in accordance with some embodiments of the disclosure;
Fig. 4 illustrates a detailed schematic diagram of the framework for image segmentation in accordance with some embodiments of the disclosure;
Fig. 5 illustrates a schematic diagram of a text encoding module in accordance with some embodiments of the disclosure;
Fig. 6 illustrates a schematic diagram of an image encoding module in accordance with some embodiments of the disclosure;
Fig. 7 illustrates a schematic diagram of a decoding module in accordance with some embodiments of the disclosure;
Figs. 8A-8D illustrate segmentation results of example embodiments in accordance with the disclosure.

Throughout the figures, same or similar reference numbers will always indicate same or similar elements.

### DETAILED DESCRIPTION OF EMBODIMENTS

Principle of the present disclosure will now be described with reference to some example embodiments. It is to be understood that these embodiments are described only for the purpose of illustration and help those skilled in the art to understand and implement the present disclosure, without suggesting any limitations as to the scope of the disclosure. The disclosure described herein can be implemented in various manners other than the ones describe below.

As used herein, the term "comprise/include" and its variants are to be read as open terms that mean "comprise/include, but not limited to." The term "based on" is to be read as "based at least in part on." The term "one embodiment" and "an embodiment" are to be read as "at least one embodiment." The term "another embodiment" is to be read as "at least one other embodiment." Moreover, it is to be understood that in the context of the present disclosure, the terms "first," "second" and the like are used to indicate individual elements or components, without suggesting any limitation as to the order of these elements. Further, a first element may or may not be the same as a second element.

As described above, existing methods for medical image segmentation mostly focus on data augmentation and model modification, but there are still some gaps between the result and the expected. One of the reasons is that all the existing approaches only focused on the image data, not including the text data, nevertheless the most component of the patients' records are written by natural language and formatted into free text files. In the clinical practice, the clinical indication and the real clinical questions are quite important for the better medical segmentation. For example, the radiotherapy physicians would consider more about the clinical indication of patient to contour the CTV (clinical target volume) for the treatment; the cardiologists would take the clinical questions of chronic diseases or plaque status into consideration when they want to do the segmentation on vessels for diagnosis. All these useful clinical indications can be found in the medical notes.

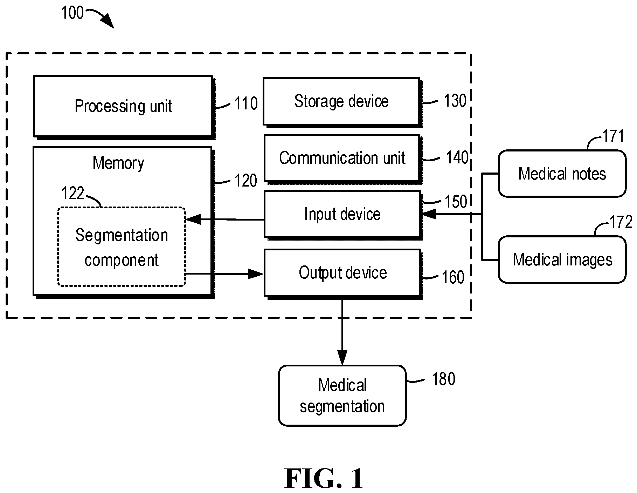

In view of this, a novel framework utilizing both image and text data of a patient has been proposed. The framework can digest all available patient data to improve the ceiling of segmentation accuracy without requiring a large amount of expensive annotated data. For the purpose of a higher performance, in the framework, a text encoding module (e.g. deep network) may capture characteristics of text data, and an image encoding module may capture characteristics of image data, for example, multi-modality medical images including CT, MRI, and etc. from a picture archiving and communication system (PACS). The outputs of the text encoding network and the image encoding network are high-level features with semantic information. A fusion encoder of the framework may combine the high-level text and image features to obtain a fused high-level feature, which may be further input to a decoding module to generate a low-level feature representing segmentation of the image data. Implementation details of the embodiments of the disclosure will be described with reference to Figs. 1 to 8D.

Fig. 1 illustrates a block diagram of a computing device 100 in which embodiments of the disclosure can be implemented. It should be understood that the computing device 100 shown in Fig. 1 is only exemplary and does not limit the functions and scopes of the embodiments described by the disclosure. According to Fig. 1, components of the computing device 100 can include, but not limited to, one or more processors or processing units 110, a memory 120, a storage device 130, one or more communication units 140, one or more input devices 150 and one or more output devices 160.

In some embodiments, the computing device 100 can be implemented as various user terminals or service terminals having the computing capability. The service terminals can be servers, large-scale computing devices, and the like provided by a variety of service providers. For example, the computer device 100 may be included in or connected to PACS.

The processing unit 110 can be a physical or virtual processor and can execute various processing based on the programs stored in the memory 120. In a multi-processor system, a plurality of processing units executes computer-executable instructions in parallel to enhance the parallel processing capability of the computing device 100. The processing unit 110 also can be referred to as the central processing unit (CPU), graphic processing unit (GPU), microprocessor, controller, and microcontroller.

The computing device 100 may include a plurality of computer storage media. Such media can be any media accessible by the computing device 100, including but not limited to volatile and non-volatile media, removable and non-removable media. The memory 120 can be a volatile memory (e.g., register, cache, Random Access Memory (RAM)), a non-volatile memory (such as Read-Only Memory (ROM), Electrically Erasable Programmable Read-Only Memory (EEPROM), flash), or any combinations thereof. The memory 120 can include a segmentation component 122 implemented as a program module, the segmentation component 122 being configured as a program module that executes the function of contouring medical images in combination with associated texts (e.g. medical notes) as described herein. The segmentation component 122 can be accessed and run by the processing unit 110 to perform corresponding functions.

The segmentation component 122 may include neural networks that receive data in various modes (e.g., texts, images, and the like) as input and convert them into data in the form of vectors, also known as features or embeddings. In case a neural network is designed to receive texts as input, the resultant vector after conversion is referred to as text feature. The neural network may be referred to as a text encoding module or a text encoder which may be interchangeably used hereafter. In case a neural network is designed to receive images as input, the resultant vector after conversion is referred to as an image feature. Accordingly, the neural network may be referred to as an image encoding module or an image encoder which may be interchangeably used hereafter as well. The text encoding module and the image encoding module may provide features at different levels. Generally, the low-level features have higher resolution and contain more location and detailed information, but undergo less processing in the neural network. The low-level features may have lower semantics and more noise. The high-level features may undergo more processing in the neural network, have stronger semantic information, but the resolution is low. The segmentation component 122 may comprise a fusion module, for example, an unsupervised variational auto encoder (VAQ) which may combine a high-level text feature and a high-level image and generate a target high-level feature. The fusion module may convert a combination of the outputs of the text encoding module and the image encoding module (e.g. concatenation, addition or dot production of two features) to the target high-level feature in a latent embedding space. The segmentation component 122 may further comprise a decoding module configured to receive the target high-level feature as input and output the corresponding low-level feature. Multiple low-level features may be combined to generate a target low-level feature. The segmentation component 122 may visualize the target low-level feature for segmentation of the image data.

The storage device 130 can be a removable or non-removable medium and may include a machine-readable medium, which may be used for storing information and/or data and may be accessed within the computing device 100. The computing device 100 may include a further removable/non-removable, volatile/non-volatile storage medium. Although not shown in Fig. 1, there can be provided a disk drive for reading from or writing into a removable and non-volatile disk and an optical disk drive for reading from or writing into a removable and non-volatile optical disk. In such cases, each drive can be connected to a bus (not shown) via one or more data medium interfaces.

The communication unit 140 enables communication with another computing device through communication media. Additionally, functions of components of the computing device 100 may be realized by a single computer cluster or multiple computing machines, and these computing machines may communicate with each other through communication connections. Therefore, the computing device 100 may operate in a networked environment using a logic connection to one or more other servers, a Personal Computer (PC), or a further general network node.

The input device 150 may be one or more various input devices, such as a mouse, a keyboard, a trackball, a voice-input device, and the like. The output device 160 may be one or more output devices, e.g., a display, a loudspeaker, a printer, etc. The computing device 100 also may communicate through the communication unit 140 with one or more external devices (not shown) as required, wherein the external devices, e.g., storage devices, display devices, etc., communicate with one or more devices that enable the users to interact with the computing device 100, or with any devices (such as network card, modem and the like) that enable the computing device 100 to communicate with one or more other computing devices. Such communication can be implemented via input/output (I/O) interfaces (not shown).

In some embodiments, apart from being integrated on an individual device, some or all of the respective components of the computing device 100 may be set in the form of cloud computing architecture. In the cloud computing architecture, these components may be remotely arranged and may cooperate in implementing the functions described by the disclosure. In some embodiments, the cloud computing provides computation, software, data access, and storage services without a terminal user being aware of physical positions or configurations of systems or hardware providing such services. In various embodiments, the cloud computing provides services via Wide Area Network (such as the Internet) using suitable protocols. For example, the cloud computing provider provides, via the Wide Area Network, the applications, which may be accessed through a web browser or any other computing components. Software or components of the cloud computing architecture and corresponding data may be stored on a server at a remote position. The computing resources in the cloud computing environment may be merged or spread at a remote data center. The cloud computing infrastructure may provide, via a shared data center, the services even though they are shown as a single access point for the user. Therefore, components and functions described herein may be provided using the cloud computing architecture from a service provider at a remote position. Alternatively, components and functions may be provided from a conventional server, or they may be mounted on a client device directly or in other ways.

According to various embodiments of the disclosure, the computing device 100 may perform image segmentation based on at least one image and associated text data. As shown in Fig. 1, the computing device 100 may receive medical notes 171 from the input device 150. The input medical notes 171 may include, for example, pathology and histology reports by physicians. The computing device 100 may further receive medical images 172 of patients from the input device 150. The medical images 172 may include, a multi-modality medical image including a computerized tomography (CT) image, magnetic resonance (MR) image, positron emission tomography (PET) and the like. Alternatively, the computing device 100 also may read from the storage device 130 the medical notes 171 and the medical images 172, or receive via the communication device 140 the medical notes 171 and the medical images 172 from other devices. The computing device 100 may transmit the input medical notes 171 and medical images 172 to the segmentation component 122. The segmentation component 122 output medical segmentation 180 based on the input medical notes 171 and image data 172. The output medical segmentation 180 include a contoured organ boundary or a highlighted region in the image data 172. It is to be understood that embodiments of the present disclosure can be applied to a different environment than that is shown in Fig. 1. For example, the computing device 100 may perform image segmentation for different types of images other than the medical images.

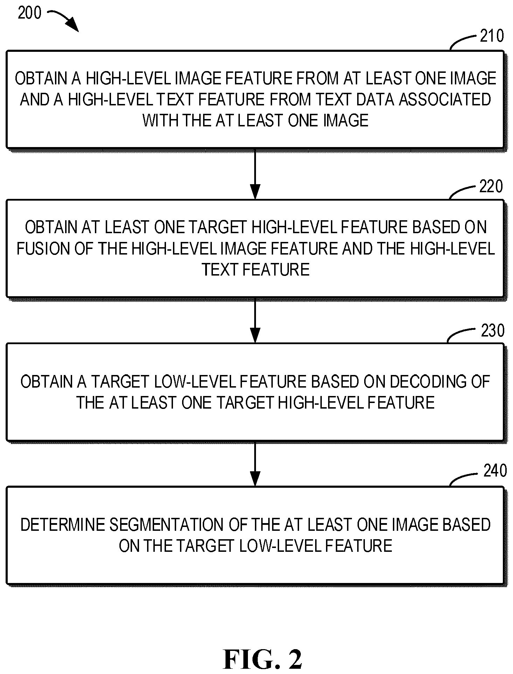

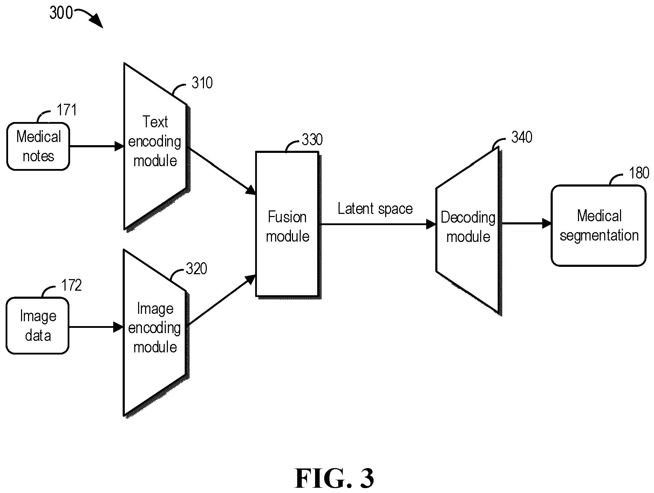

Fig. 2 illustrates a schematic flowchart of a method 200 for image segmentation in accordance with embodiments of the disclosure. The method 200, for example, may be implemented by the computing device 100 shown in Fig. 1. More specifically, the method 200 may be implemented by the segmentation component 122 in Fig. 1. It should be understood that the method 200 may include additional acts not shown and/or omit the illustrated acts. The scope of the disclosure is not limited in this regard. To facilitate the description, the method 200 is explained with reference to Fig. 3, which illustrates a corresponding framework 300 for image segmentation in accordance with embodiments of the disclosure. The framework 300 is an example implementation of the segmentation component 122 shown in Fig. 1.

As shown in Fig. 2, at block 210, the computing device 100 obtains a high-level image feature from at least one image and a high-level text feature from text data associated with the at least one image. In some embodiments, the at least one image may comprise a multi-modality medical image, and the text data may comprise free text from pathology or histology, for example medical notes 171. The computing device 100 may generate the high-level text feature from the medical notes 171, for example, using the text encoding module 310 of Fig. 3. The computing device 100 may also generate the high-level image feature from the image data notes 172, for example, using the image encoding module 320.

The text encoding module 310 may be a trained neural network that receives the input medical notes 171 as input and encodes it into the text feature in the form of a vector. The text feature contains the semantic information of the medical notes 171. For example, the text encoding module 310 may comprise a long short-term memory (LSTM) network, a bidirectional encoder representations from transformers (BERT) network, or a combination thereof.

In some embodiments, text of the medical notes may be firstly divided into word level {W1, W2, W3,..., Wn} where Wn denotes the number of words in the real description sentences. Then the text encoding module 310 is used to convert each word into word vectors {V1, V2, V3,...,Vn}. In order to extract the semantic information, a LSTM network-based text encoder may be employed to attain high-level embeddings {f1,f2,f3,...,fn}. The output of the last step in the LSTM may be encoded by two fully connected layers into the required dimension as the image encoding module 320, such that encoded high-level text feature can be combined with the image feature at the semantic level in the output of image encoding network 320 and the decoding module 340

In order to improve the ceiling of image segmentation with respect to the available image and text data, the framework 300 may utilize an encoder-decoder structure with convolutional blocks. The image encoding module 320 may accept series of images from available modalities due to the complex clinical questions. To be exact, the image encoding module 320 consisting of several convolutional blocks may encode multi-modality images into the mixed representation of image features. The image encoding module 320 works like the real clinical practice, for example, in the radiotherapy scenarios, physicians need to take the CT and MR image together into consideration for the medical segmentation.

At block 220, the computing device 110 obtains at least one target high-level feature based on fusion of the high-level image feature and the high-level text feature. The computing device 100 may generate one or more target high-level feature using the fusion module 330 of Fig. 3.

In some embodiments, the fusion module 330 may combine the high-level image feature and the high-level text feature to generate a fused high-level feature. For example, the fused high-level feature may be a concatenation of the output text and image features from the modules 310 and 320. Alternatively, the fused high-level feature may be an addition of the text and image features per element of vector. Alternatively, the fused high-level feature may be a dot production of the text and image features. The fusion module 330 may further transform the target high-level feature (including text, image, and/or the fused one) to a target feature based on codebook including discrete representations in a latent space. For example, the high-level feature, including the text, image and fused one, may be mapped to a corresponding nearest representation of the discrete representations of the codebook.

The codebook-based mapping can empower the framework to train a deep learning model with a fewer medical data. In some embodiments, the codebook may be obtained according to the vector quantized (VQ) method which allows the framework to learn the discrete latent representation which is often ignored in traditional auto-encoding variational (VAE) framework. By combing the VQ method into VAQ framework to extract the raw image to the latent space, the fusion module 330 may force itself to map the input high-level feature into the nearest codebook and produces compressed representation, which may increase the capability of the multi-modality encoder. Even though with a relatively small number of experiment data, the discrete latent space learnt by VQ enhanced VAE is capable of capturing important features of the data in a completely unsupervised manner, and provide a more robust space for all types of information to fuse in the high-level dimension.

Referring back to Fig. 2, at block 230, the computing device 100 obtains a target low-level feature based on decoding of the at least one target high-level feature. The computing device 100 may generate the target low-level feature using the decoding module 340 of Fig. 3.

After the combination of image encoding and text encoding at the semantic level to capture the deep representation, the decoding module 340 consisting of up-sampling blocks may convert target high-level feature(s) to corresponding low-level feature(s). As mentioned, the target high-level feature(s) may comprise feature(s) corresponding to text, image, and/or fused feature at high-level. The decoding module 340 may perform decoding of the respective target high-level features, and combine the decoded low-level features to obtain the target low-level feature. In some embodiments, the decoded low-level features may be further combined with low-level features from the text and image encoding modules 310 and 320. For example, the text and image encoding modules 310 and 320 may provide intermediate latent features as the low-level features to bypass the fusion module 330 and decoding module 340. The combination may comprise any of concatenation, addition or dot production operations. As such, the framework 300 may obtain the target low-level feature based on not only the outputs of the decoding module 340, but also the intermediate encoded features from the text and image encoders 310 and 320.

As an example implementation, each of the up-sampling blocks of the decoding module 340 may consist of an upconvolution of 2*2*2 by strides of two in each dimension, followed by two 3*3*3 convolutions each followed by a ReLu activation function. A special structure of shortcut connections may be applied to bridge the essential high-resolution features from the encoding modules to this decoding module. Then, another output from the natural language embedding network may be concatenated along with another channel dimension. In the last, a 1*1*1 convolution layer may be set up to reduce the number of output channels to the number of required labels for segmentation.

At block 240, the computing device 100 determines segmentation 180 of the at least one image based on the target low-level feature. In some embodiments, the computing device 100 may generate one or more contours or regions in the at least one image based on a full connected network with the target low-level feature as input.

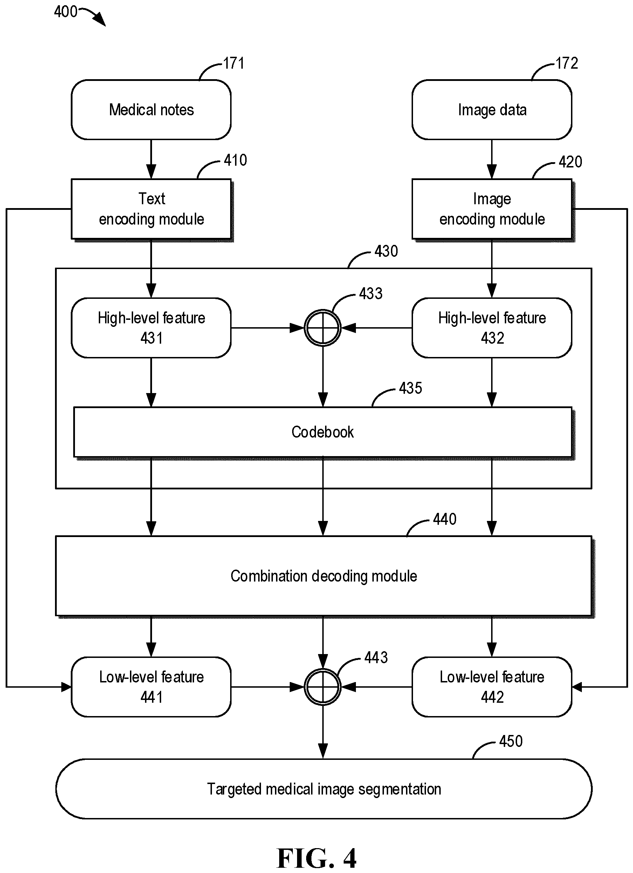

Fig. 4 illustrates a detailed schematic diagram of the framework 400 for image segmentation in accordance with some embodiments of the disclosure. The framework 400 may be an example implementation of the framework shown in Fig. 3.

As shown, the framework 400 comprises a text encoding module configured to receive text data in form of medical notes 171 and an image encoding module 420 configured to receive image data. The image data 172 may comprise a multi-modality medical image and the text data 171 may be associated free text from pathology or histology of the patient. The text encoding module 410 may generate a high-level text feature 431 from the medical notes 171. The image encoding module 420 may generate a high-level image feature 432 from the image data 172.

The framework 400 further comprises a fusion module 430 configured to receive the high-level text feature 431 from the text encoding module 410 and the high-level image feature 432 from the image encoding module 420. As shown, the fusion module 430 includes a fusion mechanism 433 configured to combine the high-level text feature 431 and the high-level image feature 432. For example, the fusion mechanism 433 may perform concatenation, element-wise sum, or dot product operation on the high-level text feature 431 and the high-level image feature 432 and generate a fused high-level feature (not shown in Fig. 4 for clarity).

In some embodiments, the fusion module 430 may be implemented as a vector quantised-variational autoencoder (VQ-VAE). As shown, the fusion module 430 comprises a codebook 435 for mapping features to discrete representations in a latent space. Regarding the fused high-level feature denoted as Xc, the closest matching representation may be found in the codebook and the fused high-level feature Xc may be replaced with the corresponding discrete code or representation fq(Xc) as a target high-level feature. Additionally or alternatively, the high-level text feature 431 and the high-level image feature 432 may be mapped to the corresponding discrete codes as target high-level features. For example, let X1 be the high-level text feature 431 and X2 the high-level image feature 432, X1 and X2 may be mapped to fq(X1) and fq(X2) in the codebook 435. This step can ensure that the fused feature is also mapped into a discrete code, maintaining consistency with the individual feature like fq(X1) and fq(X2).

In some embodiments, the discrete representations of the codebook 435 may be updated using a graph attention network (GAT) applied to the codebook 435. For example, during training of the GAT, the transformed features fq(X1), fq(X2) and fq(Xc) at high-level may be decoded to low-level features, which may be further combined and provided as back propagation input to the GAT. By combining GAT with VQ-VAE, the quality and semantic representation ability of the generated embedding space may be significantly enhanced. This fusion approach can be particularly beneficial in the task of text-enhanced medical segmentation, where capturing meaningful relationships and semantic associations is crucial for improved model performance and results.

The framework 400 further comprises a combination decoding module 440 configured to decode high-level features to low-level features. The decoding module 440 may convert the quantized high-level features from the codebook 435 to corresponding low-level features. In some embodiments, the decoding module 440 may decode the quantized high-level features (e.g. fq(X1), fq(X2) and fq(Xc)) to obtain decoded low-level features. The decoded low-level features may comprise a first low-level feature 441 corresponding to the high-level text feature 431, a second low-level feature 442 corresponding to the high-level image feature 432, and a third decoded feature (not shown) corresponding to a fused high-level feature of the high-level text feature 431 and the high-level image feature 432.

In addition to the decoded features, the framework 400 may directly obtain low-level features from the text encoding module 410 and the image encoding module 420. The low-level features from encoding modules 410 and 420 may be intermediate vectors in the deep networks of the text and image encoding modules. Specially, the text encoding module 410 may provide a low-level text feature, and the image encoding module 420 may provide a low-level image feature. Full-connected layers may be applied to adapt the dimensions of the low-level feature from encoding modules 410 and 420 in line with the decoded features from combination decoding module 440.

In the framework 400, another fusion mechanism 443 may generate a target low-level feature based on low-level features. As shown, fusion mechanism 443 may receive the low-level features from the combination decoding module 440, and optionally low-level features from the text encoding module 410 and the image encoding module 420. The fusion mechanism 443 may apply a concatenation, addition or dot production operation on the low-level features to output a target low-level feature.

Once the target low-level feature is generated, the framework 400 may further generate targeted medical image segmentation 450 based on the target low-level feature. In some embodiments, the target low-level feature may include labels indicating whether a pixel or voxel of the image data 172 belongs to a boundary, region, or volume of an organ structure. By visualizing the target low-level feature, segmented image may be displayed at the computing device 100.

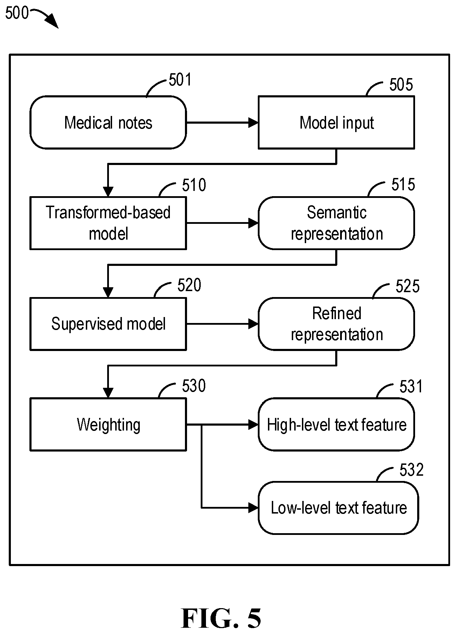

Fig. 5 illustrates a schematic diagram of a text encoding module 500 in accordance with some embodiments of the disclosure. The text encoding module 500 may be an example implementation of any of the text encoding modules shown in Fig. 3 and Fig. 4. As shown, the text encoding module 500 comprises a transformer-based model 510, a supervised model 520 and a weighting model 530.

The transformer-based model 510 may be configured to receive model input 505 from medical notes 501. In some embodiments, the medical notes 501 may be pre-processed to generate the model input 505. For example, free text such as targeted sentences in the medical notes 501 may be divided into word level and a pre-trained word-level embedding model may be used to convert each word into word vectors of model input 505. The transformed-based model 510 is configured to generate sematic representation 515 of a piece of text.

In some embodiments, the transformer-based model 510 may be any of BERT (Bidirectional Encoder Representations from Transformers) or GPT (Generative Pre-trained Transformer) model. These transformer models can capture contextual relationships between words and generating rich word embeddings. For example, the model 510 may comprise a series of stacked transformer layers, each of which contains a self-attention sublayer and a feedforward neural network sublayer. The self-attention sublayer is responsible for learning relationships between input tokens (words or phrases) and generating a weighted representation of the input sequence. The feedforward neural network sublayer applies a nonlinear transformation to the weighted representation to generate the output of the layer. The output of each layer is then passed to the next layer, until the final output is generated. By adapting the transformer-based model 510 to the medical domain, the framework can effectively capture complex semantic relationships in medical text, leading to more accurate and contextually aware representations.

The semantic representation 515 is further input into the supervised model 520. The supervised model 520 is configured to generate a refined text representation 525 from the sematic representation 515. In some embodiments, the supervised model 520 may be supervised trained on down-stream tasks such as named entity, relationship extraction, etc.

In the text encoding module 500, the refined representation 525 is further input into the weighting model 530, which is configured to generate text feature of the input medical notes 501, including the high-level text feature 531 and the low-level text feature 532. With the weighting model 530, the high-level text feature 531 and the low-level text feature 532 can be stratified.

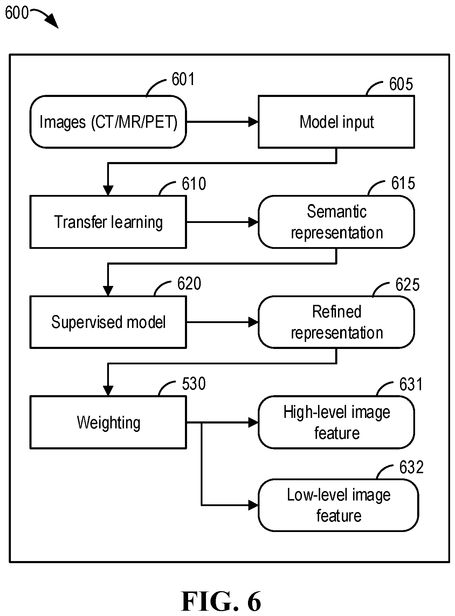

Fig. 6 illustrates a schematic diagram of an image encoding module 600 in accordance with some embodiments of the disclosure. The image encoding module 600 may be an example implementation of any of the image encoding modules shown in Fig. 3 and Fig. 4. As shown, the image encoding module 600 comprises a transfer learning model 610, a supervised model 620 and a weighting model 630.

The transfer learning model 610 may be configured to receive model input 605 from a medical image 601. The medical image 601 may include multiple modality images, such CT, MR, and PET images. In some embodiments, the medical images 601 may be pre-processed to improve the quality of model input 605. For example, pre-processing may comprise adjusting the size of the images to match the input layer of network, augmenting the images with a combination of resizing, rotation, reflection, shear, and translation transformations, noise filtering, etc. The transfer learning model 610 is configured to generate semantic representation 615 of the input image 601.

In some embodiments, the transfer learning model 610 may include a pre-trained model on large-scale image datasets, such as ImageNet or Medical ImageNet. By leveraging pre-trained models, the framework can benefit from the learned low-level and high-level image features. The transfer learning approach allows the model to capture generic image features and then fine-tune them specifically for the medical domain (image classification/registration/segmentation).

The supervised model 620 is configured to receive the semantic representation 615 and generate refined representation 625. In some embodiments, the supervised model 620 may be supervised trained on down-stream tasks such as image classification, image registration and image segmentation, etc. This can lead to improved performance and generalization, especially when dealing with limited medical image data.

In the image encoding module 600, the refined representation 625 is further input into the weighting model 630, which is configured to generate image feature of the input medical image 601, including the high-level feature 631 and the low-level image feature 632. With the weighting model 630, the high-level image feature 631 and the low-level image feature 632 can be stratified as well.

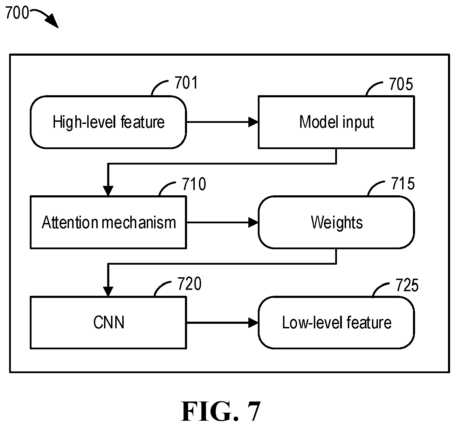

Fig. 7 illustrates a schematic diagram of a decoding module 700 in accordance with some embodiments of the disclosure. The decoding encoding module 700 may be an example implementation of any of the decoding modules shown in Fig. 3 and Fig. 4. As shown, the decoding module 700 comprises an attention mechanism 710 and a convolution neutral network (CNN) 720.

The attention mechanism 710 may be configured to receive model input 705 from the high-level feature 701 and generate weights 715. The high-level feature 701 may be any of the high-level text feature, the high-level image feature, the fused text and image feature, or transformed versions thereof (for example, by use of a codebook). The attention mechanisms 710 allows the model to focus on relevant parts of the encoded information during the decoding process. By incorporating the attention mechanism 710 in the decoding module 700, the framework can prioritize and emphasize important features from both the text and image data, leading to more accurate and detailed segmentation results. This attention-based decoding approach can improve the interpretability the model and enable it to capture fine-grained details in the generated contouring images.

In some embodiments, the CNN 720 may comprise CNN-based up-sampling blocks for decoding the high-level features. In addition, the weights 715 are applied to the CNN 720 for generating the low-level feature 725 corresponding to the input high-level feature 701. As discussed, multiple low-level features may be combined to obtain the target low-level feature, which can further be visualized for contouring. In some embodiments, the target low-level feature may be back propagation input into embedding space of a GAT for updating the codebook.

Experiments in accordance with embodiments of the disclosure are discussed as below. The experiments are performed with sample patient data of cervical carcinoma and prostate carcinoma. This dataset consists of complete CT scans of abdomen and corresponding clinical information, including the gender, age, surgery, clinical grade, and so on. In addition, some patients with cervical carcinoma or prostate carcinoma would do the surgery of hysterectomy or prostatectomy, and the surgery information would be recorded in their report as well. For the simple demonstration, the organs at risk (OARs) of bladder and rectum are chosen to be the experimental targets.

The encoder and the decoder of the framework are composed of several convolution layers with a filter size of 3*3*3. Except for the first and last layer, the activation layer of ReLU and batch normalization are implemented after all layers in all encoder and decoder network. The output of the text encoding network is a 128*128*128 volume which is made up from repeating sentence vectors. The output of the LSTM network was passed through one fully-connected layer which have 128 neurons. As for rectum and bladder datasets, patients' data with the labelled segmentation are obtained respectively. The data is split into 12 training sets and 6 testing sets and 16:8 respectively by the rate of 7:3. Then the training set was divided into 4 folders and every folder has 3 patients and 4 patients respectively, which is implemented as k-folder (k=4) cross validation. In addition, the rate of dropout is set as 0.2 and the number of epochs settle down to 200. As for the configuration of solver, the initial learning rate is 0.0001 and the decay rate of weight is 0.00001.

Regarding quantitative analysis, after the cross-validation on the testing dataset, the average dice accuracy of the proposed framework with VQ-VAE and the complete framework with natural language processing (NLP) and VQ-VAE could be compared with the results of classic 3D U-net structure in Table 1 below.

**Table 1**

| Average Dice | U-net | Our framework (vqvae) | Our framework (vqvae + NLP) |
|---|---|---|---|
| Rectum | cannot converge | 0.6104 | 0.6584 |
| Bladder | 0.7914 | 0.8140 | 0.8699 |

Based on the results, the convergence rate of the U-net is much slower than our framework with a relatively small sample, and the result of Rectum based on 3D U-net cannot even converge with the same training data. The proposed framework has a better result compared to the classic U-net. While more clinical data is digested into this framework, the result could still have a significant improvement from 0.6104 to 0.6584 for Rectum and 0.8140 to 0.8699 for Bladder respectively.

Regarding qualitative analysis, because the trained deep-learning model could distinguish the gender and body status by learning the NLP information through all types of text data from clinical practice, the proposed framework can digest much more data and more types of data rather than some specific data type or single grouped data. This framework enables the deep learning model to be more robust and versatile.

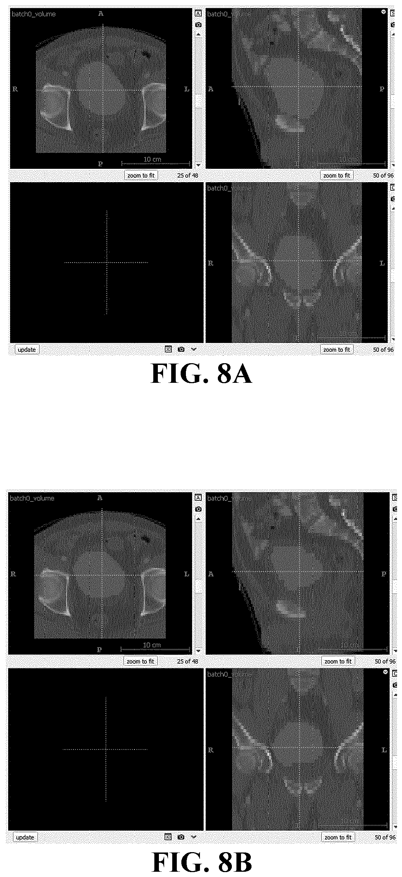

For instance, there is a significant difference between intact patients who didn't take any surgeries and post-hysterectomy or post-prostatectomy patients, because the surgery would impact the location and position of organs in abdomen. Because the clinical information contains the data of surgery, the proposed framework can also learn the difference between intact patients and post-hysterectomy or post-prostatectomy patients. Through inputting the NLP information, the well-trained model could significantly improve the contouring results in Figs.8A to 8D.

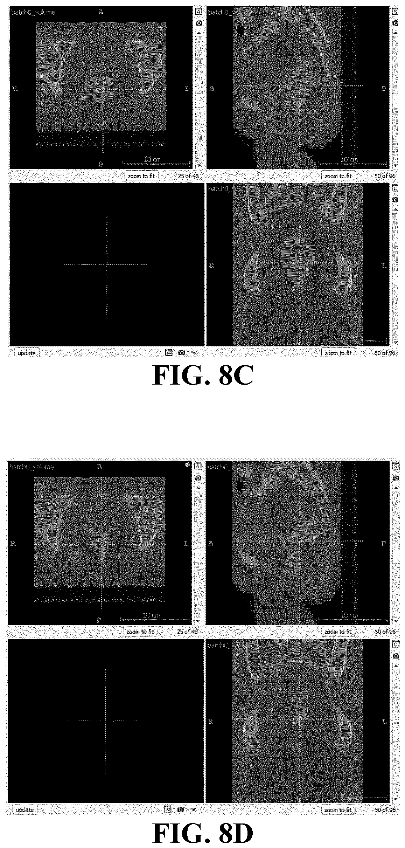

Fig. 8A and 8B show contoured bladder structure of a post-prostatectomy patient, where Fig. 8A is from the VQ-VAE plus NLP framework, and Fig. 8B is from the VQVAE framework. And Fig. 8C and 8D show contoured rectum structure of a post-prostatectomy patient, where Fig. 8C is from the VQ-VAE plus NLP framework, and Fig. 8D is from the VQ-VAE framework.

By comparing the visualized result at the same position above, it could be explicitly noticed that the framework with the text encoder have more confidence to contour the organ boundary. Compared to the contoured red area in Fig. 8B and 8D, the volume of that in Fig. 8A and 8C are significantly bigger and closer to the real ground truth of the organ. Moreover, it turns out that, with the help of text information, the proposed solution could be more accurate to recognize the differences caused by surgery and gender.

The solution for image segmentation using associated text data in accordance with embodiments of the disclosure has been described above with reference to Figs. 1 to 8D. In comparison to conventional methods, embodiments of the disclosure can utilize all available types of data, including multi-modality image data (e.g. CT, MR, etc.) and text data from different sources. Especially for some complicated medical segmentation cases like tumor contouring in radiotherapy, the proposed scheme could help to take advantage of both clinical information from NLP and multi-modality fused image information because the cancer patient could have totally different clinical condition on medical reports and imaging findings on the different modality images (both are crucial for contouring). In addition, the proposed method could facilitate the segmentation closer to the real clinical conditions.

In some embodiments, enhanced VAE (VQ-VAE) is used to fuse the image and text data into the high-level dimension of latent space with discrete representations. Even though with a relatively small number of experiment data, the result still shows that the discrete latent space learnt by VQ enhanced VAE capture important features of the data in a completely unsupervised manner, and provide a more robust space for all types of information to fuse in the high-level dimension. On the other hand, the text information both in the high-dimension during encoding and low-dimension during decoding are fused to capture relationship between the text data and the image data.

Thus, the embodiments of the disclosure can generate high-quality segmentation without require large amount of annotated data. Some example embodiments of the disclosure are listed below.

In a first aspect, the embodiments of the present disclosure provide a method for image segmentation. The method comprises obtaining a high-level image feature from at least one image and a high-level text feature from text data associated with the at least one image; obtaining at least one target high-level feature based on fusion of the high-level image feature and the high-level text feature; obtaining a target low-level feature based on decoding of the at least one target high-level feature; and determining segmentation of the at least one image based on the target low-level feature. In this way, a framework utilizing both image and text patient data is provided to improve the ceiling of accuracy of image segmentation and to be able to cover more occasions.

According to embodiments of the present disclosure, obtaining at least one target high-level feature may comprise: obtaining a fused high-level feature by combing the high-level image feature and the high-level text feature; and transforming, based on a codebook including discrete representations, at least one of the fused high-level feature, the high-level image feature and the high-level text feature to the at least target high-level feature.

In some embodiments of the first aspect, the transforming may comprise: transforming at least one of the fused high-level feature, the high-level image feature and the high-level text feature to a corresponding nearest representation of the discrete representations.

In some embodiments of the first aspect, the discrete representations of the codebook may be updated during training of a graph attention network (GAT) applied to the codebook.

In some embodiments of the first aspect, the target low-level feature may be provided as back propagation input to the GAT during the training.

In some embodiments of the first aspect, combing the high-level image feature and the high-level text feature may comprise: performing a concatenation, addition or dot production operation on the high-level image feature and the high-level text feature.

In some embodiments of the first aspect, obtaining a target low-level feature may comprise: decoding the at least one target high-level feature to obtain at least one decoded low-level feature; and obtaining the target low-level feature based on the at least one decoded low-level feature.

In some embodiments of the first aspect, the at least one decoded low-level feature may comprise: a first decoded feature corresponding to the high-level text feature; a second decoded feature corresponding to the high-level image feature; and a third decoded feature corresponding to a fused high-level feature of the high-level text feature and the high-level image feature.

In some embodiments of the first aspect, obtaining the target low-level feature may comprise: obtaining a low-level image feature from the at least one image and a low-level text feature from the text data; and obtaining the target low-level feature based on a combination of the at least one decoded low-level feature, the low-level image feature and the low-level text feature.

In some embodiments of the first aspect, the high-level text feature may be obtained based on a natural language embedding module comprising: a first transformer-based model for generating a sematic representation of a piece of text; a first supervised model for generating a refined text representation from the sematic representation; and a first weighting model for generating at least one text feature from the refined text representation.

In some embodiments of the first aspect, the high-level image feature may be obtained based on an image encoding module comprising: a second transformer-based model for generating a generic representation of an image; a second supervised model for generating a refined image representation from the generic representation; and a second weighting model for generating at least one image feature from the refined image representation.

In some embodiments of the first aspect, the at least one target high-level feature may be decoded based on a decoding module comprising: attention mechanisms for generating weights; and convolution neural network (CNN)-based up-sampling blocks.

In some embodiments of the first aspect, determining segmentation of the at least one image based on the target low-level feature may comprise: generating a contour in the at least one image based on a full connected network with the target low-level feature as input.

In some embodiments of the first aspect, the at least one image may comprise a multi-modality medical image, and wherein the text data comprises free text from pathology or histology.

In a second aspect, the embodiments of the present disclosure provide a device. The device comprises: a processor; and a memory having instructions stored thereon, when executed by the processor, cause the device to: obtain a high-level image feature from at least one image and a high-level text feature from text data associated with the at least one image; obtain at least one target high-level feature based on fusion of the high-level image feature and the high-level text feature; obtain a target low-level feature based on decoding of the at least one target high-level feature; and determine segmentation of the at least one image based on the target low-level feature.

The embodiments of the second aspect may achieve similar advantages and technical effect as the first aspect, which are thus omitted for simplicity.

In a third aspect, the embodiments of the present disclosure provide a computer program product comprising a computer readable medium. The computer readable medium has computer readable code embodied therein. The computer readable code is configured such that, on execution by a computer or processor, the computer or processor is caused to perform the method of the first aspect.

For the purpose of illustrating spirit and principle of the present disclosure, some specific embodiments thereof have been described above. In general, the various example embodiments may be implemented in hardware or special purpose circuits, software, logic or any combination thereof. Some aspects may be implemented in hardware, while other aspects may be implemented in firmware or software which may be executed by a controller, microprocessor or other computing device. While various aspects of the example embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

In the context of the present disclosure, a machine readable medium may be any tangible medium that can contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Computer program code for carrying out methods of the present disclosure may be written in any combination of one or more programming languages. These computer program codes may be provided to a processor of a general purpose computer, special purpose computer, or other programmable data processing apparatus, such that the program codes, when executed by the processor of the computer or other programmable data processing apparatus, cause the functions or operations specified in the flowcharts and/or block diagrams to be implemented. The program code may execute entirely on a computer, partly on the computer, as a stand-alone software package, partly on the computer and partly on a remote computer or entirely on the remote computer or server.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of any disclosure or of what may be claimed, but rather as descriptions of features that may be specific to particular embodiments of particular disclosures. Certain features that are described in this specification in the context of separate embodiments can also be implemented in combination in a single embodiment. Conversely, various features that are described in the context of a single embodiment can also be implemented in multiple embodiments separately or in any suitable sub-combination.

Various modifications, adaptations to the foregoing example embodiments of this disclosure may become apparent to those skilled in the relevant arts in view of the foregoing description, when read in conjunction with the accompanying drawings. Any and all modifications will still fall within the scope of the non-limiting and example embodiments of this disclosure. Furthermore, other embodiments of the disclosures set forth herein will come to mind to one skilled in the art to which these embodiments of the disclosure pertain having the benefit of the teachings presented in the foregoing descriptions and the drawings.

Therefore, it will be appreciated that the embodiments of the disclosure are not to be limited to the specific embodiments disclosed and that modifications and other embodiments are intended to be included within the scope of the appended claims. Although specific terms are used herein, they are used in a generic and descriptive sense only and not for purposes of limitation.

## Claims

1. A computer-implemented method (200) comprising:
obtaining (210) a high-level image feature from at least one image and a high-level text feature from text data associated with the at least one image;
obtaining (220) at least one target high-level feature based on fusion of the high-level image feature and the high-level text feature;
obtaining (230) a target low-level feature based on decoding of the at least one target high-level feature; and
determining (240) segmentation of the at least one image based on the target low-level feature.

2. The method of claim 1, wherein obtaining at least one target high-level feature comprises:
obtaining a fused high-level feature by combing the high-level image feature and the high-level text feature; and
transforming, based on a codebook including discrete representations, at least one of the fused high-level feature, the high-level image feature and the high-level text feature to the at least target high-level feature.

3. The method of claim 2, wherein the transforming comprises:
transforming at least one of the fused high-level feature, the high-level image feature and the high-level text feature to a corresponding nearest representation of the discrete representations.

4. The method according to one of the claims 2-3, wherein the discrete representations of the codebook are updated during training of a graph attention network (GAT) applied to the codebook.

5. The method of claim 4, wherein the target low-level feature is provided as back propagation input to the GAT during the training.

6. The method according to one of the claims 2-5, wherein combing the high-level image feature and the high-level text feature comprises:
performing a concatenation, addition or dot production operation on the high-level image feature and the high-level text feature

7. The method according to one of the claims 1-6, wherein obtaining a target low-level feature comprises:
decoding the at least one target high-level feature to obtain at least one decoded low-level feature; and
obtaining the target low-level feature based on the at least one decoded low-level feature.

8. The method of claim 7, wherein the at least one decoded low-level feature comprises:
a first decoded feature corresponding to the high-level text feature;
a second decoded feature corresponding to the high-level image feature; and
a third decoded feature corresponding to a fused high-level feature of the high-level text feature and the high-level image feature.

9. The method according to one of the claims 7-8, wherein obtaining the target low-level feature comprises:
obtaining a low-level image feature from the at least one image and a low-level text feature from the text data; and
obtaining the target low-level feature based on a combination of the at least one decoded low-level feature, the low-level image feature and the low-level text feature.

10. The method according to one of the claims 1-9, wherein the high-level text feature is obtained based on a natural language embedding module comprising:
a transformer-based model (510) for generating a sematic representation of a piece of text;
a first supervised model (520) for generating a refined text representation from the sematic representation; and
a first weighting model (530) for generating at least one text feature from the refined text representation.

11. The method according to one of the claims 1-10, wherein the high-level image feature is obtained based on an image encoding module (320, 600) comprising:
a transfer learning model (610) for generating a generic representation of an image;
a second supervised model (620) for generating a refined image representation from the generic representation; and
a second weighting model (630) for generating at least one image feature from the refined image representation.

12. The method according to one of the claims 1-11, wherein the at least one target high-level feature is decoded based on a decoding module (700) comprising:
attention mechanisms (710) for generating weights; and
convolution neural network (CNN)-based up-sampling blocks.

13. The method according to one of the claims 1-13, wherein determining segmentation of the at least one image based on the target low-level feature comprises:
generating a contour in the at least one image based on a full connected network with the target low-level feature as input.

14. A device (100), comprising:
a processor (110); and
a memory (120) having instructions stored thereon, when executed by the processor, cause the device to:
obtain a high-level image feature from at least one image and a high-level text feature from text data associated with the at least one image;
obtain at least one target high-level feature based on fusion of the high-level image feature and the high-level text feature;
obtain a target low-level feature based on decoding of the at least one target high-level feature; and
determine segmentation of the at least one image based on the target low-level feature.

15. A computer program product comprising a computer readable medium, the computer readable medium having computer readable code embodied therein, the computer readable code being configured such that, on execution by a computer or processor, the computer or processor is caused to perform the method as claimed in any one of claims 1 to 13.
